# EUROPEAN PATENT APPLICATION

(11) **EP 4 818 911 A1**
(43) Date of publication of application: **07.10.2026**
(21) Application number: 24906301.7
(22) Date of filing: 16.12.2024
(51) Int. Cl.: G06F 12/084

(54) **NETWORK PROCESSOR AND MESSAGE PROCESSING METHOD**

(30) Priority: 18.12.2023 CN 202311760350
(71) Applicant: Huawei Technologies Co., Ltd., Shenzhen, Guangdong 518129 (CN)
(72) Inventor: HAN, Bing, Shenzhen, Guangdong 518129 (CN); LI, Yi, Shenzhen, Guangdong 518129 (CN); GONG, Peng, Shenzhen, Guangdong 518129 (CN); ZHANG, Kang, Shenzhen, Guangdong 518129 (CN)
(74) Representative: Gill Jennings & Every LLP
(86) International application number: PCT/CN2024/139647
(87) International publication number: WO 2025/130820

(57) **Abstract**

This application provides a network processor and a packet processing method, and relates to the field of computer technologies. The network processor includes a match module, an action module, and a buffer, and the match module and the action module share the buffer. The buffer is configured to store first program state information. The match module is configured to update the first program state information based on a to-be-processed packet, to obtain second program state information, where the second program state information includes characteristic information of the to-be-processed packet. The action module is configured to process the second program state information in the buffer. In this architecture of the network processor, PS information does not need to be fully written and read back and forth between the two modules, so that a quantity of times of reading and writing the full PS information is greatly reduced. This can save bandwidth resources of the network processor, and reduce power consumption of the network processor.

## Description

This application claims priority to Chinese Patent Application No. 202311760350.3, filed with the China National Intellectual Property Administration on December 18, 2023 and entitled "NETWORK PROCESSOR AND PACKET PROCESSING METHOD", which is incorporated herein by reference in its entirety.

### TECHNICAL FIELD

Embodiments of this application relate to the field of computer technologies, and in particular, to a network processor and a packet processing method.

### BACKGROUND

A network processor is a programmable device, and is configured to process various tasks in the communication field, such as packet processing, protocol analysis, and route search. An existing network processor mainly has two architectures: One is an asynchronous run-to-complete (RTC) architecture, and the other is a synchronous pipeline architecture. The pipeline architecture is a pipeline architecture including a plurality of pipeline nodes. When a packet is processed, the packet sequentially flows through pipeline nodes on a pipeline, and each pipeline node is responsible for completing only a part of an entire processing procedure.

The pipeline nodes in the network processor are generally in a match-action (Match-Action, MA) model structure, that is, each pipeline node includes a match module and an action module. The match module is responsible for obtaining information about a to-be-processed packet through matching, to determine a processing action of the action module. The action module executes the processing action based on a matching result of the match module. Generally, buffer structures are separately provided in the match module and the action module. A buffer in the match module is used to absorb an input/output I/O query delay, and a buffer in the action module is used to absorb a processing delay.

Based on the foregoing structure, when the pipeline node processes a packet, program state (Program State, PS) information corresponding to the packet needs to be fully written into the buffer in the match module first. After the match module completes matching, the PS information corresponding to the packet needs to be fully read and fully written into the buffer in the action module. In this way, in an entire packet processing procedure, the program state PS information is copied back and forth between the buffer in the match module and the buffer in the action module, that is, the PS information is continuously fully written and read. This severely wastes bandwidth resources of the network processor and causes huge power consumption.

### SUMMARY

Embodiments of this application provide a new network processor and a packet processing method. In the network processor, a match module and an action module share a same buffer, that is, there is no need to separately provide buffers for the match module and the action module. In this way, when a packet is processed, PS information is first written into the shared buffer, and the match module and the action module only need to read a part of information from the shared buffer as required. After the match module and the action module sequentially complete execution of a matching action and a processing action, the shared buffer fully outputs updated PS information. In this way, the PS information does not need to be fully written and read back and forth between the two modules, so that a quantity of times of reading and writing the full PS information is greatly reduced. This can save bandwidth resources of the network processor, and reduce power consumption of the network processor.

According to a first aspect, an embodiment of this application provides a network processor, and a match module and an action module in the network processor share a buffer. The shared buffer first stores first PS information. After a to-be-processed packet is transmitted to the match module, the match module updates the first PS information stored in the buffer based on the to-be-processed packet. In this way, the first PS information stored in the buffer changes to second PS information including characteristic information of the to-be-processed packet. Then, the action module performs processing on the second PS information in the buffer.

In the foregoing embodiment, after the full first PS information is stored in the shared buffer, the match module first reads a part of information of the first PS information as required, and then updates the first PS information based on the part of read information. In this way, the first PS information stored in the shared buffer is updated to the second PS information that carries the characteristic information corresponding to the to-be-processed packet. Then, the action module executes a processing action based on the second PS information in the buffer. In other words, after PS information is fully written into the shared buffer, the PS information is fully read only after the match module and the action module sequentially complete execution of related actions. In this way, the PS information does not need to be copied back and forth between the match module and the action module, so that a quantity of times of reading and writing the full PS information is greatly reduced. This can save bandwidth resources of the network processor, and reduce power consumption of the network processor.

In an optional implementation, after completing update of the first PS information, the match module needs to send an update completion notification to the action module. After receiving the update completion notification, the action module starts a processing procedure, and starts to perform processing on the second PS information stored in the buffer. In comparison with an existing architecture, after completing execution of a matching action, the match module does not need to send the full second PS information to the action module, but sends a trigger signal like the update completion notification. The match module and the action module share a buffer, and both the match module and the action module may directly access the shared buffer. In this way, a quantity of times of reading the full PS information is reduced, and the power consumption of the network processor is reduced.

In an optional implementation, when executing the matching action, the match module needs to first read a part of information as required from the first PS information stored in the shared buffer, and then generate an index based on the part of read information. Then, the characteristic information of the to-be-processed packet is queried from an external device based on the index, and the obtained characteristic information is written into the first PS information in the shared buffer. In this way, the first PS information in the shared buffer is updated to the second PS information. In this embodiment, the match module only needs to read or write a small amount of information as required. In this way, an amount of data that is read/written is greatly reduced, and the power consumption of the network processor is further reduced.

In an optional implementation, when executing the processing action, the action module first reads a part of to-be-processed information from the second PS information in the shared buffer as required. The to-be-processed information includes the characteristic information that is of the to-be-processed packet and that is previously written by the match module. Then, the action module performs processing on the to-be-processed information, and writes a processing result into the second PS information in the shared buffer. In this way, the second PS information in the shared buffer is updated to third PS information. Similarly, the action module also only needs to read or write a small amount of information as required. In this way, the amount of data that is read/written is reduced, and the power consumption of the network processor is further reduced.

In an optional implementation, when completing execution of a current round of action, the action module may further send feedback information to the match module, to notify the match module that a current round of update is completed. After receiving the feedback information, the match module may further perform a next round of update on the PS information. For example, another part of information is read as required. After another index is generated, other characteristic information of the to-be-processed packet is found based on the index, and then the PS information is updated based on the other characteristic information. It may be understood that, when the action module and the match module perform a plurality of rounds of update on the PS information, the PS information only needs to be fully written into and read from the shared buffer once. In this way, dynamic power consumption of the network processor is greatly reduced.

In an optional implementation, the network processor includes pipeline nodes in a pipeline architecture. Each pipeline node includes the match module and the action module. When the to-be-processed packet passes through each pipeline node, each pipeline node performs only a part of an entire processing procedure. Only one buffer may be provided in each pipeline node, and the match module and the action module in the pipeline node share the buffer.

According to a second aspect, an embodiment of this application provides a packet processing method, and the packet processing method is applied to a network processor. A match module and an action module in the network processor share a buffer. The packet processing method includes: First, first PS information is stored in the shared buffer. After a to-be-processed packet is transmitted to the match module, the match module updates the first PS information stored in the buffer based on the to-be-processed packet. In this way, the first PS information stored in the buffer changes to second PS information including characteristic information of the to-be-processed packet. Then, the action module performs processing on the second PS information in the buffer.

In the foregoing embodiment, after the full first PS information is stored in the shared buffer, the match module first reads a part of information of the first PS information as required, and then updates the first PS information based on the part of read information. In this way, the first PS information stored in the shared buffer is updated to the second PS information that carries the characteristic information corresponding to the to-be-processed packet. Then, the action module executes a processing action based on the second PS information in the buffer. In other words, after PS information is fully written into the shared buffer, the PS information is fully read only after the match module and the action module sequentially complete execution of related actions. In this way, the PS information does not need to be copied back and forth between the match module and the action module, so that a quantity of times of reading and writing the full PS information is greatly reduced. This can save bandwidth resources of the network processor, and reduce power consumption of the network processor.

In an optional implementation, when updating the first PS information in the buffer, the match module needs to first read a part of information as required from the first PS information stored in the shared buffer, and then generate an index based on the part of read information. Then, the characteristic information of the to-be-processed packet is queried from an external device based on the index, and the obtained characteristic information is written into the first PS information in the shared buffer. In this way, the first PS information in the shared buffer is updated to the second PS information. In this embodiment, the match module only needs to read or write a small amount of information as required. In this way, an amount of data that is read/written is greatly reduced, and the power consumption of the network processor is further reduced.

In an optional implementation, after completing update of the first PS information, the match module needs to send an update completion notification to the action module. After receiving the update completion notification, the action module starts a processing procedure, and starts to perform processing on the second PS information stored in the buffer. In comparison with an existing architecture, after completing execution of a matching action, the match module does not need to send the full second PS information to the action module, but sends a trigger signal like the update completion notification. The match module and the action module share a buffer, and both the match module and the action module may directly access the shared buffer. In this way, a quantity of times of reading the full PS information is reduced, and the power consumption of the network processor is reduced.

In an optional implementation, when starting to execute the processing procedure, the action module first reads a part of to-be-processed information from the second PS information in the shared buffer as required. The to-be-processed information includes the characteristic information that is of the to-be-processed packet and that is previously written by the match module. Then, the action module performs processing on the to-be-processed information, and writes a processing result into the second PS information in the shared buffer. In this way, the second PS information in the shared buffer is updated to third PS information. Similarly, the action module also only needs to read or write a small amount of information as required. In this way, the amount of data that is read/written is reduced, and the power consumption of the network processor is further reduced.

In an optional implementation, when completing execution of a current round of action, the action module may further send feedback information to the match module, to notify the match module that a current round of update is completed. After receiving the feedback information, the match module may further perform a next round of update on the PS information. It may be understood that, when the action module and the match module perform a plurality of rounds of update on the PS information, the PS information only needs to be fully written into and read from the shared buffer once. In this way, dynamic power consumption of the network processor is greatly reduced.

According to a third aspect, an embodiment of this application provides a chip, where the chip includes the network processor according to any one of the first aspect, and modules of the network processor are configured to run code instructions to perform any packet processing method provided in the second aspect.

According to a fourth aspect, an embodiment of this application provides a computer-readable storage medium. The computer-readable storage medium stores at least one computer program instruction, and the computer program instruction is loaded and executed by a computer to implement any packet processing method provided in the second aspect.

For technical effects brought by any implementation of the third aspect and the fourth aspect, refer to the technical effects brought by a corresponding implementation of the first aspect and the second aspect. Details are not described herein again.

**In** this embodiment of this application, a match module and an action module in the network processor share a buffer. In this way, when the network processor performs a processing procedure, full first PS information is first written into the shared buffer. Then, the match module reads, based on a to-be-processed packet, a part of information of the first PS information as required, obtains characteristic information of the to-be-processed packet based on the part of data, and writes the characteristic information into the first PS information, to obtain second PS information. Then, the action module also reads a part of information (including the characteristic information) of the second PS information as required, performs processing on the characteristic information, and recently writes a processing result into the second PS information. After the match module and the action module complete execution of the entire processing procedure, finally obtained full PS information is read from the buffer. Therefore, a quantity of times that the PS information is fully read and written is greatly reduced, and bandwidth resources of the network processor are saved. In addition, the match module and the action module also only need to read a part of data as required, and an amount of data that is read or written by the two modules is greatly reduced. This further saves the bandwidth resources of the network processor and reduces power consumption of the network processor.

### BRIEF DESCRIPTION OF DRAWINGS

FIG. 1 is a diagram of a structure of a network processor in a pipeline architecture according to an embodiment of this application;
FIG. 2A is a diagram of a structure of a pipeline node according to an embodiment of this application;
FIG. 2B is a diagram of a structure of another pipeline node according to an embodiment of this application;
FIG. 3A is a diagram of a structure of a new network processor according to an embodiment of this application;
FIG. 3B is a diagram of a structure of another new network processor according to an embodiment of this application;
FIG. 3C is a diagram of a structure of another new network processor according to an embodiment of this application;
FIG. 4 is a diagram of a structure of a new pipeline node according to an embodiment of this application;
FIG. 5 is a diagram of a structure of another new pipeline node according to an embodiment of this application; and
FIG. 6 is a schematic flowchart of a packet processing method according to an embodiment of this application.

### DESCRIPTION OF EMBODIMENTS

Embodiments of this application provide a new network processor and a packet processing method. In the network processor, a match module and an action module share a same buffer, that is, there is no need to separately provide buffers for the match module and the action module. In this way, when a packet is processed, PS information is first written into the shared buffer, and the match module and the action module only need to read a part of information from the shared buffer as required. After the match module and the action module sequentially complete execution of a matching action and a processing action, the shared buffer fully outputs updated PS information. In this way, the PS information does not need to be fully written and read back and forth between the two modules, so that a quantity of times of reading and writing the full PS information is greatly reduced. This can save bandwidth resources of the network processor, and reduce power consumption of the network processor.

In descriptions of this application, unless otherwise specified, "/" indicates that associated objects are in an "or" relationship. For example, A/B may represent A or B. In this application, "and/or" merely describes only an association relationship between associated objects and indicates that three relationships may exist. For example, A and/or B may represent the following three cases: Only A exists, both A and B exist, and only B exists, where A and B may be singular or plural.

In the descriptions of this application, unless otherwise specified, "a plurality of" means two or more than two. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In embodiments of this application, the terms such as "example" or "for example" are used to represent giving an example, an illustration, or a description. Any embodiment or design solution described as an "example" or "for example" in embodiments of this application should not be explained as being more preferred or having more advantages than another embodiment or design solution. Exactly, use of the terms such as "example" or "for example" is intended to present a related concept in a specific manner for ease of understanding.

It may be understood that, an "embodiment" used throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments by using any appropriate manner. It may be understood that, sequence numbers of processes do not mean execution sequences in various embodiments of this application. The execution sequences of the processes should be determined based on functions and internal logic of the processes, and should not be construed as any limitation on implementation processes of embodiments of this application.

It may be understood that, in some scenarios, some optional features in embodiments of this application may be independently implemented without depending on another feature, for example, a solution on which the optional features are currently based, to resolve a corresponding technical problem and achieve a corresponding effect. Alternatively, in some scenarios, the optional features may be combined with other features based on a requirement. Correspondingly, the apparatus provided in embodiments of this application may also correspondingly implement these features or functions. Details are not described herein.

In this application, unless otherwise specified, for same or similar parts of embodiments, mutual reference may be made between embodiments. In embodiments of this application, unless otherwise specified or a logical conflict occurs, terms and/or descriptions in different embodiments are consistent and may be mutually referenced, and different embodiments may be combined based on an internal logical relationship thereof, to form a new embodiment. The following implementations of this application are not intended to limit the protection scope of this application.

For ease of understanding the technical solutions in embodiments of this application, the following first briefly describes related technologies in embodiments of this application.

The network processor is a programmable device, and is configured to process various tasks in the communication field, such as packet processing, protocol analysis, and route search. An existing network processor mainly has two architectures. One is an asynchronous run-to-complete (RTC) architecture, and the other is a synchronous pipeline architecture.

The pipeline architecture is a pipeline architecture including a plurality of pipeline nodes. When a packet is processed, the packet sequentially flows through pipeline nodes on a pipeline, and each pipeline node is responsible for completing only a part of an entire processing procedure. The pipeline nodes on the pipeline are generally in a Match-Action model structure. A programmable Match-Action model can implement a protocol-independent network data forwarding processing procedure, including two parts: match logic and action logic. The match logic is implemented through a combination of a hybrid lookup table of a static random access storage and a ternary content-addressable storage, a counter, a traffic statistics table, and a general hash table. The action logic is implemented through a combination of a set of ALU standard Boolean and arithmetic operation units, a set of data packet header modification operations, or a set of hash operations.

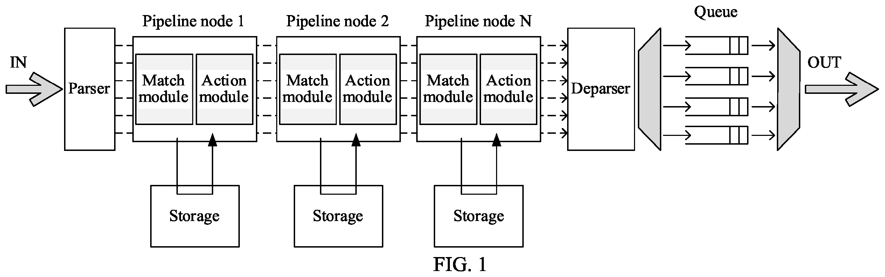

Based on the foregoing description, FIG. 1 is a diagram of a structure of a network processor in a pipeline architecture according to an embodiment of this application. The network processor may be used in devices that require high-bandwidth and high-performance data communication, such as a router, a switch, and a base station. As shown in FIG. 1, the network processor includes a plurality of serial pipeline nodes. During packet processing, a packet sequentially passes through the plurality of pipeline nodes. The packet first passes through a parser Parser, and the parser parses a data packet based on a data packet header declared by a programmer, and generates an independent data packet header and intermediate information. Then, the parsed packet sequentially passes through the pipeline nodes, and the pipeline nodes sequentially perform a series of packet processing procedures, for example, matching a flow table based on a parsed packet header and meta information, and performing operations such as modification, addition, and deletion on the packet header. Each pipeline node processes only a part. In each pipeline node, a match module is responsible for performing table lookup through matching from an external storage, to determine a processing action of an action module. The action module executes the processing action based on a matching result of the match module. Finally, the processed packet is re-serialized through a deparser Deparser, and then enters a queue and waits for output.

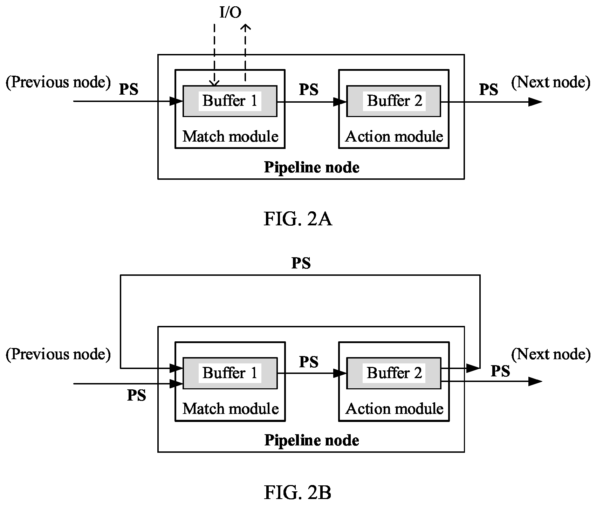

FIG. 2A is a diagram of a structure of a pipeline node according to an embodiment of this application. As shown in FIG. 2A, the pipeline node includes a match module and an action module. Buffers are separately provided for the match module and the action module, to store program state PS information of a packet. The PS information is state information of program running, including information such as an Ethernet header, an IP header, and a TCP header of a packet, a global variable and a local variable of program running, an entry returned by I/O, and an instruction address related to a program control flow.

A buffer 1 provided for the match module is generally implemented by using a low-cost memory, and is used to absorb an I/O delay. A buffer 2 provided for the action module is generally implemented by using a register, and is used to absorb a processing delay. Based on this structure, when performing a packet processing procedure, the pipeline node first copies the entire PS information to the buffer 1 in the match module. After the match module completes execution of a matching action, the pipeline node fully reads the PS information in the buffer 1 and fully copies the PS information to the buffer 2 in the action module. Then, the action module executes an execution action based on the PS information in the buffer 2.

As shown in the figure, when the match module and the action module perform a matching-processing procedure for one time, the full PS information needs to be copied from the buffer 1 to the buffer 2. When the pipeline node is in a loopback mode, that is, when the matching-processing procedure needs to be performed for a plurality of times, the full PS information is transmitted back and forth between the two buffers of the pipeline node. As shown in FIG. 2B, it is assumed that after a packet enters the pipeline node, inloop is performed on the packet for three times in the pipeline node, that is, the pipeline node performs the matching-processing procedure on the packet for four times. In this case, quantities of times of reading and writing memories of the two buffers are four respectively. In other words, eight times of the full PS information need to be read from and written into the two buffers in total. Generally, the full PS information in a network processor is generally at an order of 512 bytes. Reading and writing eight times of the full PS information means that the processor in this architecture needs to read and write 4096 bytes of memory data. Therefore, a bus width of the network processor needs to be large enough, and a chip area needs to be large enough. In addition, an excessively large amount of data read from the memory causes a high reversal rate of the buffer, and dynamic power consumption of the entire network processor increases greatly, seriously affecting performance of the network processor.

To resolve the foregoing problem, embodiments of this application provide an architecture of a new network processor, and provide a packet processing method based on the architecture. In the new network processor, a match module and an action module share a same buffer, that is, there is no need to separately provide buffers for the match module and the action module. In this way, when a packet is processed, PS information is first written into the shared buffer, and the match module and the action module only need to read a part of information from the shared buffer as required. After the match module and the action module sequentially complete execution of the matching action and a processing action, the shared buffer fully outputs updated PS information. In this way, the PS information does not need to be fully written and read back and forth between the two modules, so that a quantity of times of reading and writing the full PS information is greatly reduced. This can save bandwidth resources of the network processor, and reduce power consumption of the network processor.

The following first describes the architecture of the network processor.

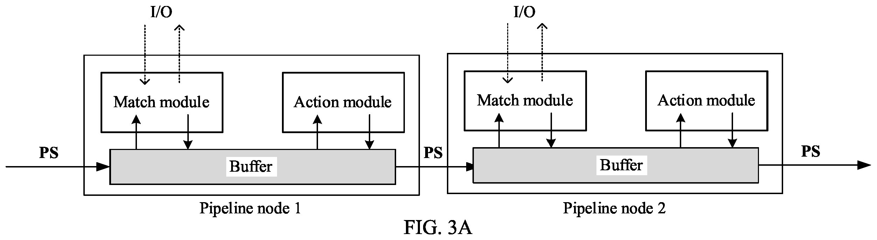

FIG. 3A is a diagram of a structure of a new network processor according to an embodiment of this application. As shown in FIG. 3A, the network processor includes a plurality of pipeline nodes. Each pipeline node includes a match module and an action module, and the match module and the action module share a buffer. As shown in FIG. 3A, pipeline nodes are serially connected. After being output from a previous pipeline node, a to-be-processed packet is input to a next pipeline node. Each pipeline node includes one buffer, and all the match modules and the action modules in one pipeline node share the buffer.

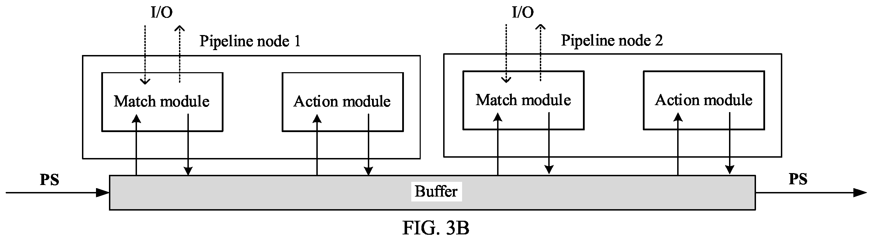

For example, in the network processor, a plurality of serial pipeline nodes may also share a same buffer. As shown in FIG. 3B, the plurality of pipeline nodes are serially connected. Each pipeline node includes only the match module and the action module, and no buffer is provided. A shared buffer is provided outside the pipeline nodes, and the match modules and the action modules of the plurality of pipeline nodes share the same buffer.

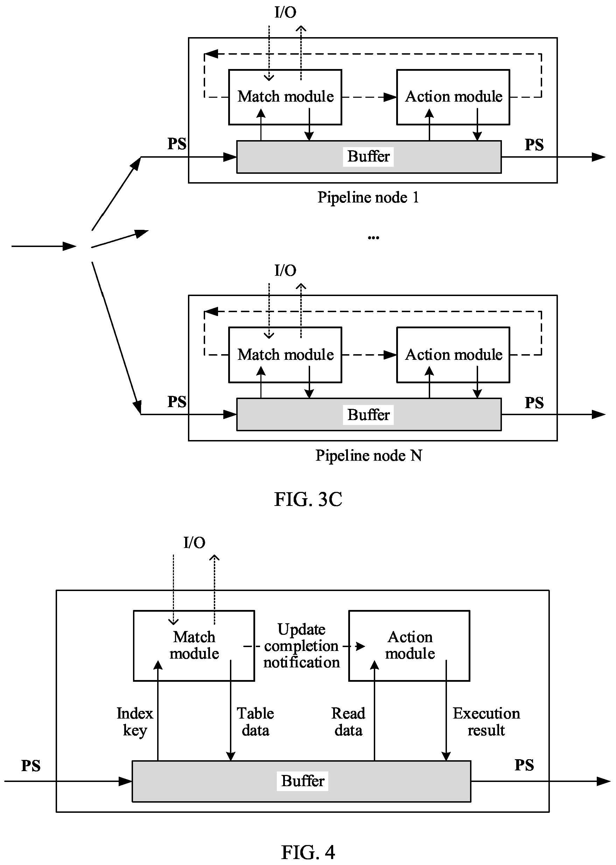

For example, the plurality of pipeline nodes in the network processor may also be connected in parallel, to form a parallel pipeline architecture. As shown in FIG. 3C, the plurality of pipeline nodes are connected in parallel, to form a plurality of parallel branches. In this way, a plurality of paths of traffic may be processed at the same time. A pipeline node on one of the branches has a loopback function. For example, a node 1 may loop back the to-be-processed packet, that is, the node 1 may output a processed packet after performing a plurality of rounds of matching-processing procedures on the to-be-processed packet. In the parallel architecture, the match module and the action module of each pipeline node may share a same buffer. In addition, the match modules and the action modules of the plurality of pipeline nodes on one branch may also share a same buffer. This is not limited herein.

Based on the foregoing description, the following describes in detail a processing procedure for the match module and the action module of one pipeline node.

FIG. 4 is a diagram of a structure of a new pipeline node according to an embodiment of this application. As shown in FIG. 4, the pipeline node includes a match module and an action module, and the match module and the action module share a program state buffer (Program State Buffer, PSB). The PSB is configured to store PS information of a packet, for example, information such as an Ethernet header, an IP header, and a TCP header of the packet, a global variable and a local variable of program running, an entry returned by I/O, and an instruction address related to a program control flow.

First, first PS information of the packet needs to be fully written into the PSB. In this way, when a to-be-processed packet is transmitted to the pipeline node, the match module reads a part of information as required, obtains characteristic information of the to-be-processed packet from an external I/O device based on the part of data, and then writes the characteristic information back into the first PS information in the PSB, to complete update of the first PS information. Finally, the action module reads a part of information as required, including the newly written characteristic information, and then performs data processing based on the characteristic information, to complete an execution action.

A process in which the match module reads information is as follows: The match module first obtains, based on the to-be-processed packet, index information from the first PS information stored in the PSB, and then generates an index based on the index information. Then, the characteristic information corresponding to the to-be-processed packet is obtained from the external I/O device based on the index, and then the characteristic information is written back into the first PS information in the PSB. In this way, the first PS information stored in the PSB is updated to second PS information.

After the match module completes the update of the first PS information, for example, the match module needs to send an update completion notification to the action module, to notify the action module that a matching action of the match module is completed. In this way, the action module triggers an execution procedure, and starts to process the second PS information in the PSB.

After starting to process the procedure, the action module also first reads information as required. Specifically, the action module first reads a part of to-be-processed information from the second PS information in the PSB as required. The to-be-processed information includes the characteristic information that is of the to-be-processed packet and that is previously written by the match module. Then, the action module performs processing on the to-be-processed information, and writes a processing result into the second PS information in the PSB. In this way, the second PS information in the PSB is updated to third PS information.

It may be understood that, the pipeline node may be serially connected to another pipeline node. When a pipeline node performs a table lookup operation once, that is, performs a round of matching-processing procedure, after the action module completes execution of a processing action, the PSB outputs the full PS information stored in the PSB to a next pipeline node.

The following uses a specific example to describe one matching-processing procedure of the pipeline node.

It is assumed that the pipeline node is used to modify an IPv4 routing table. The PS information of the packet is first written into the PSB of a pipeline. Then, based on an IPv4 routing table program entry that is carried in the PS information, the PS information of the packet is triggered to enter the match module, to construct an index key. For example, the match module reads, from the PS information in the PSB, a destination IP address (32 bits) of an IPv4 header and VPN information (16 bits) to which the packet belongs, where the destination IP address and the VPN information are required for constructing a key. Then, a key of the routing table is constructed based on the VPN and the destination IP address. Then, the match module sends the constructed key to an I/O request interface, and sets a PS storage location of an I/O return result and a corresponding routing table processing program entry (subsequently used by the action module), and then the process ends.

After a corresponding routing table is obtained by querying a routing table through the external I/O device, the routing table is returned to the match module through an I/O response interface. After receiving a query result, the match module writes the obtained routing table into a corresponding location of the PS information based on the PS storage location set in the previous step. Then, the match module sends trigger information to the action module, and the action module executes a subsequent processing procedure.

The action module starts a processing program for the routing table, reads the PS information (including a routing table, a packet header, and some other information that are written by the match module) required by the program from the PSB, and then obtains and executes the program through the routing table processing program entry, for example, modifying a routing table entry in the routing table, and adding a new routing table entry to the routing table. After completing execution of the program, the action module needs to send an execution result to a local CPU and set an entry for subsequent program processing. In addition, a program processing result (for example, the modified routing table) needs to be written back into the PS information in the PSB. Then, if the entry for a subsequent program is not on the current node, the modified PS information is fully read from the PSB and written into a PSB of a next pipeline node.

In FIG. 4, black solid lines are used to represent a data plane of the pipeline node. It can be learned that, when the full first PS information is transferred from a previous pipeline node to the current pipeline node, the first PS information is first fully written into the PSB. After the match module and the action module complete execution of actions, the updated PS information is fully read from the PSB. In this way, after the pipeline node completes a round of matching-execution action, the full PS information does not need to be copied back and forth between the match module and the action module, and is read and written only once. In this way, a quantity of times of reading and writing the full PS information is greatly reduced. This can save bandwidth resources of a network processor, and reduce power consumption of the network processor.

In addition, when reading data from the PSB, the match module only needs to read the index information as required. An average length of the index information is generally about 8 bits, and an amount of the index information to be read is small. In addition, when writing data into the PSB, the match module also only needs to write a small amount of the obtained characteristic information (generally 32 bits) into the original first PS information. Similarly, the action module also only needs to read and write a small amount of data as required. Generally, an average length of the data read by the action module is about 128 bits, and an average length of the processing result written by the action module is generally 64 bits. Both the match module and the action module do not need to read and write the full PS information. In this way, an amount of data that is read from and written into a memory is greatly reduced, and the power consumption of the network processor is further reduced.

Black dashed lines are used to represent a control plane of the pipeline node. After completing execution of the matching action, the match module only needs to send the update completion notification to the action module, and does not need to send the full second PS information to the action module. The message is a trigger signal with a small amount of data. The match module and the action module share a buffer, and both the match module and the action module may directly access the shared buffer. Therefore, that each module reads and writes the full PS information can be avoided, thereby reducing the power consumption of the network processor.

It can be learned from the foregoing description that, if the pipeline node is serially connected to another pipeline node, each pipeline node performs the matching-processing procedure only once. In this case, in comparison with an existing pipeline node architecture in which buffers are provided for both the match module and the action module, one time of reading and writing the full PS information can be omitted in the pipeline node provided in this embodiment of this application. In other words, in the existing architecture, the PS information needs to be fully read from and written into the buffer in the match module once, and the PS information needs to be fully read from and written into the buffer in the action module once. However, in the pipeline node in this embodiment of this application, the PS information needs to be fully read from and written into the PSB only once.

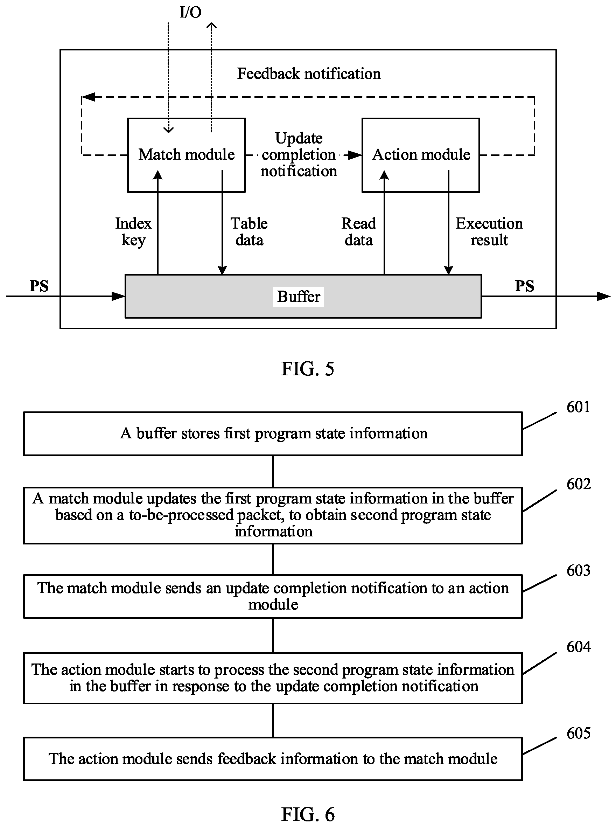

FIG. 5 is a diagram of a structure of another pipeline node according to an embodiment of this application. As shown in FIG. 5, a difference between the pipeline node and the pipeline node shown in FIG. 4 lies in that the pipeline node in this embodiment of this application is in a loopback mode, that is, one pipeline node may perform a plurality of rounds of matching-processing procedures.

The following describes a process in which the pipeline node performs the plurality of rounds of matching-processing procedures.

First, first PS information of a packet is fully written into a PSB. In this way, when a to-be-processed packet is transmitted to the pipeline node, a match module first obtains, based on the to-be-processed packet, index information from the first PS information stored in the PSB, and then generates an index based on the index information. Then, characteristic information corresponding to the to-be-processed packet is obtained from an external I/O device based on the index, and then the characteristic information is written back into the first PS information in the PSB. In this way, the first PS information stored in the PSB is updated to second PS information.

After the match module completes update of the first PS information, for example, the match module needs to send an update completion notification to an action module, to notify the action module that a matching action of the match module is completed. In this way, the action module triggers an execution procedure, and starts to process the second PS information in the PSB.

After starting to process the procedure, the action module also first reads information as required. Specifically, the action module first reads a part of to-be-processed information from the second PS information in the PSB as required. The to-be-processed information includes the characteristic information that is of the to-be-processed packet and that is previously written by the match module. Then, the action module performs processing on the to-be-processed information, and writes a processing result into the second PS information in the PSB. In this way, the second PS information in the PSB is updated to third PS information.

Then, the action module needs to send feedback information to the match module. After receiving the feedback information, the match module starts to perform a next round of matching-processing procedure. Similarly, the match module obtains, based on the to-be-processed packet, other index information from the third PS information stored in the PSB, and then generates an index based on the index information. Then, other characteristic information corresponding to the to-be-processed packet is obtained from the external I/O device based on the index, and then the other characteristic information is written back into the third PS information in the PSB. In this case, the third PS information stored in the PSB is updated to fourth PS information. Then, the match module still needs to send the update completion notification to the action module, to notify the action module that the matching action of the match module is completed. In this way, the action module triggers the execution procedure, and starts to process the updated fourth PS information in the PSB. The rest may be deduced by analogy. Details are not described herein.

The following uses a specific example to describe two rounds of matching-processing procedures of the pipeline node.

It is assumed that the pipeline node is used to modify an IPv4 routing table and query an address resolution protocol (Address Resolution Protocol, ARP). PS information of the packet is first written into the PSB of a pipeline. Then, based on an IPv4 routing table program entry that is carried in the PS information, the PS information of the packet is triggered to enter the match module, to construct an index key. For example, the match module reads, from the PS information in the PSB, a destination IP address (32 bits) of an IPv4 header and VPN information (16 bits) to which the packet belongs, where the destination IP address and the VPN information are required for constructing a key. Then, a key of the routing table is constructed based on the VPN and the destination IP address. Then, the match module sends the constructed key to an I/O request interface, and sets a PS storage location of an I/O return result and a corresponding routing table processing program entry (subsequently used by the action module), and then the process ends.

After a corresponding routing table is obtained by querying a routing table through the external I/O device, the routing table is returned to the match module through an I/O response interface. After receiving a query result, the match module writes the obtained routing table into a corresponding location of the PS information based on the PS storage location set in the previous step. Then, the match module sends trigger information to the action module, and the action module executes a subsequent processing procedure.

The action module starts a processing program for the routing table, reads the PS information (including a routing table, a packet header, and some other information that are written by the match module) required by the program from the PSB, and then obtains and executes the program through the routing table processing program entry, for example, modifying a routing table entry in the routing table, and adding a new routing table entry to the routing table. After completing execution of the program, the action module needs to send an execution result to a local CPU and set an entry for subsequent program processing. In addition, a program processing result (for example, the modified routing table) needs to be written back into the PS information in the PSB. It is assumed that the execution result of the action module is that the ARP needs to be further queried. A subsequent ARP table program entry is set first, and a program processing result (the modified routing table) of a previous round is written back into the PS information in the PSB.

Then, the ARP table program entry is entered again, and the match module constructs a new key. For example, the match module reads, from the PS information in the PSB, a next-hop IP address (32 bits, from the routing table) and destination egress information (an egress interface index of 16 bits, from the routing table) that are required for constructing the key.

A key for querying the ARP table is constructed based on the two pieces of index information: the next-hop IP address and a destination interface index. Then, the index is sent to the I/O request interface, the PS storage location of the I/O return result and a corresponding ARP table processing program entry (subsequently used by the action module) are set, and then the process ends.

After a corresponding ARP table (128 bits) is obtained through the external I/O device, the ARP table is returned to the match module through the I/O response interface. After receiving a result, the match module writes the ARP table into the PS information based on the PS storage location set in the previous step, and then triggers the action module to perform processing.

The action module starts a processing program for the ARP table, reads required PS information (including the ARP table, a packet header, and some other information) from the PSB, and then executes the program, for example, constructing a MAC link layer header by using a destination MAC address in the ARP table. Then, an entry for subsequent program processing is set, and the program processing result is written back into the PS information in the PSB. Until the entry for a subsequent program is not on the current node, the PS information is fully read from the PSB and is sent to a next pipeline node.

Similarly, in FIG. 5, black solid lines are used to represent a data plane of the pipeline node. It can be learned that, when the full first PS information is transferred from a previous pipeline node to the current pipeline node, the first PS information is first fully written into the PSB. After the match module and the action module complete execution of the plurality of rounds of matching-processing procedures, the final PS information is fully read from the PSB. In this way, regardless of how many rounds of matching-execution actions are completed by the pipeline node, the full PS information is read and written only once in one pipeline node, and does not need to be copied back and forth between the match module and the action module. In this way, a quantity of times of reading and writing the full PS information is greatly reduced. This can save bandwidth resources of a network processor, and reduce power consumption of the network processor.

In addition, when reading data from the PSB, the match module only needs to read the index information as required. An average length of the index information is generally about 8 bits, and an amount of the index information to be read is small. In addition, when writing data into the PSB, the match module also only needs to write a small amount of the obtained characteristic information (generally 32 bits) into the original first PS information. Similarly, the action module also only needs to read and write a small amount of data as required. Generally, an average length of the data read by the action module is about 128 bits, and an average length of the processing result written by the action module is generally 64 bits. Both the match module and the action module do not need to read and write the full PS information. In this way, an amount of data that is read from and written into a memory is greatly reduced, and the power consumption of the network processor is further reduced.

Black dashed lines are used to represent a control plane of the pipeline node. After completing execution of the matching action, the match module only needs to send the update completion notification to the action module. The message is a trigger signal with a small amount of data. Similarly, after completing execution of a processing action, the action module also only needs to send the feedback information to the match module to trigger a next round of matching-processing procedure. The message is also a feedback signal with a small amount of data. In this way, the full PS information does not need to be copied back and forth between the match module and the action module, to further reduce the power consumption of the network processor.

It can be learned from the foregoing description that, if the pipeline node is in the loopback mode, each pipeline node may perform the matching-processing procedure for a plurality of times. In this case, in comparison with an existing pipeline node architecture in which buffers are provided for both the match module and the action module, the full PS information only needs to be read and written once in the pipeline node provided in this embodiment of this application. If loopback is performed for N times, N-1 times of reading and writing the full PS is omitted. This greatly reduces dynamic power consumption of the network processor.

Based on the foregoing description, FIG. 6 is a schematic flowchart of a packet processing method according to an embodiment of this application. The packet processing method is applied to any one of the foregoing network processors. A match module and an action module in the network processor share a buffer. As shown in FIG. 6, when the network processor performs the packet processing method, modules execute the following steps:

601. A buffer stores first program state information.

First, a pipeline node exists in the network processor. The pipeline node includes a match module and an action module, and the match module and the action module share a buffer PSB. When the pipeline node starts to process a packet, the PSB is first configured to store PS information of the packet, for example, information such as an Ethernet header, an IP header, and a TCP header of the packet, a global variable and a local variable of program running, an entry returned by I/O, and an instruction address related to a program control flow. The first PS information of the packet needs to be fully written into the PSB.

602. The match module updates the first program state information in the buffer based on a to-be-processed packet, to obtain second program state information.

Then, when the to-be-processed packet is transmitted to the pipeline node, the match module reads a part of information as required, obtains characteristic information of the to-be-processed packet from an external I/O device based on the part of data, and then writes the characteristic information back into the first PS information in the PSB, to complete update of the first PS information. Specifically, the match module first obtains, based on the to-be-processed packet, index information from the first PS information stored in the PSB, and then generates an index based on the index information. Then, the characteristic information corresponding to the to-be-processed packet is obtained from the external I/O device based on the index, and then the characteristic information is written back into the first PS information in the PSB. In this way, the first PS information stored in the PSB is updated to the second PS information.

603. The match module sends an update completion notification to the action module.

Then, after the match module completes update of the first PS information, the match module needs to send the update completion notification to the action module, to notify the action module that a matching action of the match module is completed. In this way, the action module triggers an execution procedure, and starts to process the second PS information in the PSB.

604. The action module starts to process the second program state information in the buffer in response to the update completion notification.

After starting to process the procedure, the action module also first reads information as required. Specifically, the action module first reads a part of to-be-processed information from the second PS information in the PSB as required. The to-be-processed information includes the characteristic information that is of the to-be-processed packet and that is previously written by the match module. Then, the action module performs processing on the to-be-processed information, and writes a processing result into the second PS information in the PSB. In this way, the second PS information in the PSB is updated to third PS information.

605. The action module sends feedback information to the match module.

Then, if the match module and the action module perform a matching-processing procedure only once, after completing execution of a processing action, the action module fully reads the third PS information from the PSB, and fully writes the third PS information into a PSB of a next pipeline node. When the match module and the action module perform a plurality of rounds of matching-processing procedures, the action module needs to send the feedback information to the match module. After receiving the feedback information, the match module starts to perform a next round of matching-processing procedure. Similarly, the match module obtains, based on the to-be-processed packet, other index information from the third PS information stored in the PSB, and then generates an index based on the index information. Then, other characteristic information corresponding to the to-be-processed packet is obtained from the external I/O device based on the index, and then the other characteristic information is written back into the third PS information in the PSB. In this case, the third PS information stored in the PSB is updated to fourth PS information. Then, the match module still needs to send the update completion notification to the action module, to notify the action module that the matching action of the match module is completed. In this way, the action module triggers the execution procedure, and starts to process the updated fourth PS information in the PSB. The rest may be deduced by analogy. Details are not described herein.

In this embodiment of this application, the match module and the action module in the network processor share a buffer. In this way, when the network processor performs the processing procedure, the full first PS information is first written into the shared buffer. Then, the match module reads, based on the to-be-processed packet, a part of information of the first PS information as required, obtains the characteristic information of the to-be-processed packet based on the part of data, and writes the characteristic information into the first PS information, to obtain the second PS information. Then, the action module also reads a part of information (including the characteristic information) of the second PS information as required, performs processing on the characteristic information, and recently writes a processing result into the second PS information. After the match module and the action module complete execution of the entire processing procedure, finally obtained full PS information is read from the buffer. Therefore, a quantity of times that the PS information is fully read and written is greatly reduced, and bandwidth resources of the network processor are saved. In addition, the match module and the action module also only need to read a part of data as required, and an amount of data that is read or written by the two modules is greatly reduced. This further saves the bandwidth resources of the network processor and reduces power consumption of the network processor.

An embodiment of this application further provides a computer-readable storage medium. The computer-readable storage medium stores at least one computer program instruction, and the computer program instruction is loaded and executed by a processor to implement the packet processing method in the embodiment in FIG. 6. Details are not described herein again.

An embodiment of this application further provides a computer program product, including computer-executable instructions. When the computer-executable instructions are run on a computer, the computer is enabled to perform the packet processing method in the embodiment in FIG. 6.

An embodiment of this application further provides a chip. The chip includes the network processor according to any one of FIG. 3A to FIG. 3C. Modules of the network processor are configured to perform the packet processing method in the embodiment in FIG. 6. Details are not described herein again.

All or some of the foregoing embodiments may be implemented by software, hardware, firmware, or any combination thereof. When a software program is used to implement embodiments, all or some of the embodiments may be implemented in a form of a computer program product. The computer program product includes one or more computer instructions. When the computer program instructions are loaded and executed on a computer, all or some of procedures (or functions) described in embodiments of this application are implemented. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of plurality. A single processor or another unit may implement several functions enumerated in the claims. Some measures are recorded in dependent claims that are different from each other, but this does not mean that these measures cannot be combined to produce a better effect.

## Claims

1. A network processor, wherein the network processor comprises a match module, an action module, and a buffer, wherein
the match module and the action module share the buffer;
the buffer is configured to store first program state information;
the match module is configured to update the first program state information based on a to-be-processed packet, to obtain second program state information, wherein the second program state information comprises characteristic information of the to-be-processed packet; and
the action module is configured to process the second program state information in the buffer.

2. The network processor according to claim 1, wherein
the match module is further configured to send an update completion notification to the action module, wherein the update completion notification is used to indicate that the match module has completed update of the first program state information; and
the action module is specifically configured to start to process the second program state information in the buffer in response to the update completion notification.

3. The network processor according to claim 1 or 2, wherein the match module is specifically configured to:
obtain index information from the first program state information based on the to-be-processed packet, wherein the index information is used to generate an index; and
obtain the characteristic information based on the index, and write the characteristic information into the first program state information in the buffer, to obtain the second program state information.

4. The network processor according to claim 2 or 3, wherein the action module is specifically configured to:
read to-be-processed information from the second program state information in the buffer, wherein the to-be-processed information comprises the characteristic information; and
process the to-be-processed information, and write a processing result into the second program state information, to obtain third program state information.

5. The network processor according to claim 4, wherein
the action module is further configured to send feedback information to the match module, wherein the feedback information is used to indicate the match module to perform a next round of update on the third program state information.

6. The network processor according to any one of claims 1 to 5, wherein the network processor comprises a pipeline node, wherein
each pipeline node comprises the match module, the action module, and the buffer; and
in each pipeline node, all the match modules and the action modules share the buffer.

7. A packet processing method, applied to a network processor, wherein the network processor comprises a match module, an action module, and a buffer; in the network processor, the match module and the action module share the buffer; and the method comprises:
storing, by the buffer, first program state information;
updating, by the match module, the first program state information in the buffer based on a to-be-processed packet, to obtain second program state information, wherein the second program state information comprises characteristic information of the to-be-processed packet; and
processing, by the action module, the second program state information in the buffer.

8. The method according to claim 7, wherein the updating, by the match module, the first program state information in the buffer based on the to-be-processed packet, to obtain the second program state information comprises:
obtaining, by the match module, index information from the first program state information based on the to-be-processed packet, wherein the index information is used to generate an index; and
obtaining, by the match module, the characteristic information based on the index, and writing the characteristic information into the first program state information in the buffer, to obtain the second program state information.

9. The method according to claim 7 or 8, wherein the method further comprises:
sending, by the match module, an update completion notification to the action module, wherein the update completion notification is used to indicate that the match module has completed update of the first program state information; and
the processing, by the action module, the second program state information in the buffer comprises:
starting, by the action module, to process the second program state information in the buffer in response to the update completion notification.

10. The method according to any one of claims 7 to 9, wherein the processing, by the action module, the second program state information in the buffer comprises:
reading, by the action module, to-be-processed information from the second program state information in the buffer, wherein the to-be-processed information comprises the characteristic information; and
processing, by the action module, the to-be-processed information, and writing a processing result into the second program state information, to obtain third program state information.

11. The packet processing method according to claim 10, wherein the method further comprises:
sending, by the action module, feedback information to the match module, wherein the feedback information is used to indicate the match module to perform a next round of update on the third program state information.

12. A computer-readable storage medium storing computer instructions, comprising:
the computer instructions, wherein when the computer instructions are executed, a computer is enabled to perform the method according to any one of claims 7 to 11.

13. A chip, wherein the chip comprises the network processor according to any one of claims 1 to 6, and modules of the network processor are configured to perform the method according to any one of claims 7 to 11.
